# EUROPÄISCHE PATENTSCHRIFT

(11) **EP 2 964 588 B1**
(45) Veröffentlichungstag und Bekanntmachung des Hinweises auf die Patenterteilung: **02.10.2019**
(21) Anmeldenummer: 14708518.7
(22) Anmeldetag: 26.02.2014
(51) Int. Cl.: C04B 41/50, C04B 41/00, C04B 41/85, C04B 28/34, C04B 111/00

(54) **BESCHICHTUNGSSYSTEM AUF BASIS EINER KOMBINATION VON MONOALUMINIUMPHOSPHAT MIT MAGNESIUMOXID**
COATING SYSTEM BASED ON A COMBINATION OF MONOALUMINUM PHOSPHATE WITH MAGNESIUM OXIDE
SYSTÈME DE REVÊTEMENT À BASE D'UNE COMBINAISON DE MONOPHOSPHATE D'ALUMINIUM ET D'OXYDE DE MAGNÉSIUM

(30) Priorität: 08.03.2013 DE 102013102301
(43) Veröffentlichungstag der Anmeldung: 13.01.2016
(73) Patentinhaber: Chemische Fabrik Budenheim KG, 55257 Budenheim (DE)
(72) Erfinder: LEISTER, Michael, 55218 Ingelheim (DE); GRAF, Christian, 55126 Mainz (DE); LIPPOLD, Kirstin, 55268 Nieder-Olm (DE)
(74) Vertreter: WSL Patentanwälte Partnerschaft mbB
(86) Internationale Anmeldenummer: PCT/EP2014/053679
(87) Internationale Veröffentlichungsnummer: WO 2014/135407

(56) Entgegenhaltungen:
- DE-A1-102005 042 474
- DE-A1-102011 005 813
- GB-A- 2 120 645
- GB-A- 2 155 402
- GB-A- 2 186 277
- DONAHUE P K ET AL: "Durable phosphate-bonded natural fiber composite products", CONSTRUCTION AND BUILDING MATERIALS, ELSEVIER, NETHERLANDS, Bd. 24, Nr. 2, 1. Februar 2010 (2010-02-01), Seiten 215-219, XP026761867, ISSN: 0950-0618, DOI: 10.1016/J.CONBUILDMAT.2007.05.015 [gefunden am 2009-09-18]

## Beschreibung

Die vorliegende Erfindung betrifft ein Beschichtungssystem zur Erzeugung einer glasigen Beschichtung, welches wenigstens zwei miteinander zu kombinierende Komponenten K1 und K2 umfasst, wobei die eine Komponente mindestens eine reaktive, anorganische Phosphatverbindung enthält und die andere Komponente mindestens ein reaktives Metalloxid enthält. Darüber hinaus betrifft die vorliegende Erfindung ein Verfahren zur Beschichtung eines Substrats unter Verwendung des erfindungsgemäßen Beschichtungssystems zur Erzeugung einer glasigen Beschichtung sowie eine mit dem erfindungsgemäßen Beschichtungssystem bzw. nach dem erfindungsgemäßen Verfahren erzeugte glasige Beschichtung und einen entsprechend beschichteten Gegenstand.

Für die Beschichtung verschiedener Substrate und Oberflächen besteht ein fortwährender Bedarf nach geeigneten Beschichtungsmitteln, um den bearbeiteten Materialien die gewünschten Oberflächeneigenschaften zu verleihen. Besonders gewünscht sind dabei solche Beschichtungsmittel, mit denen Funktionsstoffe verschiedenster Art, wie z. B. Magnetpigmente, Korrosionsschutzpigmente, Farbpigmente, Luminophore, Perlglanzpigmente, Metallglanzpigmente, auf der Oberfläche eines Substrats aufgebracht werden können.

Im Stand der Technik werden zwar bereits einige anorganische Beschichtungssysteme der eingangs genannten Art beschrieben, allerdings sind die wenigsten auch dazu geeignet, Substrate bzw. Oberflächen Funktionsstoffen verschiedenster Art zu überziehen.

In WO 2006/070021 A1 wird ein Beschichtungssystem zur Beschichtung von Beton, betonartigen, mineralischen und/oder keramischen Substraten beschrieben, wobei das Beschichtungssystem zum einen ein Bindemittel umfasst, welches im Wesentlichen aus einem Aluminiumphosphat besteht, und zum anderen nanoskalige Metalloxid-Füllstoffpartikel. Die genannten nanoskalige Metalloxid-Füllstoffpartikel müssen in einem relativ aufwendigen Prozess hergestellt werden, was für die Kostensituation des entsprechenden Beschichtungssystems nachteilig ist.

In WO 01/87798 A2 wird ein Verfahren zur Herstellung einer chemisch gebundenen keramischen Kompositbeschichtung beschrieben, wobei ein Metallhydroxid dehydriert wird und das daraus hervorgehende Metalloxid mit einem Phosphatierungsmittel phosphatiert und anschließend das phosphatierte Metalloxid bei 200 bis 1200 °C kalziniert wird. Die auf diese Weise erhaltende Beschichtung wirkt in ihrer Gesamtheit als vor Verschleiß schützender keramischer Überzug. Sie ist jedoch nicht dafür geeignet, Funktionsstoffe, wie z. B. Titanoxid, Eisenoxid oder Chromoxid, auf Oberflächen zu binden, ohne deren Wirkung zu beeinträchtigen. Darüber hinaus erfordert das Kalzinieren im Temperaturbereich von 200 bis 1200°C einen hohen Energieaufwand, was Auswirkungen auf den Kostenfaktor hat.

In EP 1 624 031 A2 wird ein Verfahren beschrieben, mit dem anorganische Granulate hergestellt werden können, auf deren Oberfläche Farbpigmente mit einem Gemisch aus Wasser und einem oder mehreren Alkali- oder Erdalkalisilikaten aufgebracht werden. Allerdings sind zur Erzielung einer ausreichenden Wasser- und Witterungsbeständigkeit vergleichsweise hohe Einbrenntemperaturen im Bereich von 200 bis 900 °C (vorzugsweise >300 °C) nötig, was die Auswahl möglicher fixierbarer Funktionsstoffe stark einschränkt und den Prozess relativ energieintensiv und teuer macht.

Die Lehre von DE 10 2010 046 370 A1 sieht vor, dass zum Erzeugen von modifizierten Oberflächen auf Keramik, Glas und Metall zunächst ein Basisbeschichtungsmaterial mit einem Additiv versetzt wird und nach dem Aufbringen auf das Substrat einer Wärmebehandlung unterzogen wird, wobei modifizierte Silane eingesetzt werden und die Wärmebehandlung bei einer Temperatur im Bereich von etwa 350 bis 700 °C erfolgt. Damit ist auch bei diesem Verfahren eine relativ hohe Brenntemperatur erforderlich, was die zuvor bereits genannten Nachteile mit sich bringt.

GB 2 155 402 A beschreibt organisch gebundene Bindemittel, die aus chemischen Zusammensetzungen aus Calciumsilikat, Phosphorsäure und Metalloxiden bestehen. Durch eine Säure-Base-Reaktion werden isolierte, salzartige Phosphatmineralien erhalten.

In DE 10 2011 005 813 A1 wird ein flüssiges Bindemittel beschrieben, welches u.a. in einem wässrigen Lösungsmittel eine Kombination aus wenigstens zwei und höchstens fünf Metallphosphaten von verschiedenen Metallkationen enthält.

GB 2 186 277 A offenbart eine wässrige Aluminiumphosphatlösung, umfassend Monoaluminiumtris(-25-dihydrogenphosphat) und ein Salz, dass aus Alkalimetallen, Erdalkalimetallen und/oder Aluminium und einer Säure gebildet ist, die mindestens so stark wie Phosphorsäure ist.

In DE 10 2005 042 474 A1 wird eine Beschichtung mit einer Binderphase beschrieben, die weitgehend aus einem Phosphat besteht, und mit einem darin eingebetteten Werkstoff, wobei die Binderphase aus polymerisiertem Monoaluminiumphosphat, Monozinkphosphat, Monomagnesiumphosphat, Natriumphosphat und/oder Borphosphat gebildet ist.

Donahue, P. K., et al., beschreiben in ihrem Artikel "Durable phosphate-bonded natural fiber composite products" (Construction and Building Materials, Elsevier, Niederlande, Vol. 24, Nr. 2, Seiten 215 - 219) u.a. die Verwendung von "Magnesiumoxid".

In DE 3 218 821 A1 wird ein Mittel zur Bildung eines isolierenden Glasfilms beschrieben, wobei das darin enthaltene Magnesiumoxid z.T. eine Zitronensäureaktivität von mehr als 200 Sekunden aufweist, wobei das Mittel außerdem Calciumphosphat, wasserlösliches Ammoniumpolyphosphat, Aluminiumphosphat, Magnesiumphosphat und/oder Phosphorsäure enthält.

Nach alledem besteht auf dem Gebiet nach wie vor ein großer Bedarf nach einem Beschichtungssystem, mit dem insbesondere anorganische Substrate und Oberflächen, wie z. B. mineralische oder glasige Substrate und Oberflächen, mit anorganischen Materialien, wie z. B. Pigmenten und anderen Funktionsstoffen, beschichtet werden können, ohne dass dabei allzu hohe Temperaturen angewendet werden müssen. Es ist daher eine Aufgabe der vorliegenden Erfindung, ein entsprechend verbessertes Beschichtungssystem bereitzustellen, mit dem anorganische Substrate mit den unterschiedlichsten Funktionsstoffen beschichtet werden können, ohne dass dabei die im Stand der Technik üblicherweise nötigen hohen Temperaturen angewendet werden müssen.

Diese Aufgabe wird erfindungsgemäß gelöst durch ein Beschichtungssystem zur Erzeugung einer glasigen Beschichtung, dass dadurch gekennzeichnet ist, dass es wenigstens eine flüssige Komponente K1 und wenigstens eine feste Komponente K2 umfasst, wobei
die Komponente K1 eine wässrige Lösung ist, die wenigstens die Bestandteile
- Al(H₂PO₄)₃ und
- Al(NaHPO₄)₃,

enthält, wobei die genannten Bestandteile der Komponente K1 auf oxidischer Basis und angegeben in Masseprozent bezogen auf die Gesamtmasse der Lösung mit folgenden Anteilen in der Komponente K1 enthalten sind:

| | |
|---|---|
| P₂O₅ | 25,0 bis 37,0 |
| Al₂O₃ | 5,8 bis 9,0 |
| Na₂O | 0,1 bis 2,0 |
| H₂O | 54,0 bis 66,0 |

und wobei
die Komponente K2 wenigstens die Bestandteile
- Magnesiumoxid,
- Silikat und
- Borat
umfasst, die auf oxidischer Basis und angegeben in Masseprozent mit folgenden Anteilen in der Komponente K2 enthalten sind:

| | |
|---|---|
| MgO | 70,0 bis 95,0 |
| SiO₂ | 1,0 bis 19,0 |
| B₂O₃ | 1,0 bis 3,0 |

wobei die Reaktivität des Magnesiumoxids, bestimmt nach dem Zitronensäuretest, in dem Bereich von 40 bis 400 Sekunden liegt,
und wobei der Glühverlust der Komponente K2 nach Tempern für 2 Stunden bei 800 °C in dem Bereich von 0 bis 3,0 % liegt.

Bei einer Ausführungsform enthält die Komponente K1 in einer wässrigen Lösung die Bestandteile Al(H₂PO₄)₃ (Aluminiumdihydrogenphosphat bzw. Monoaluminiumphosphat) und Al(NaHPO₄)₃ (Aluminium-Natriumhydrogenphosphat) auf oxidischer Basis und angegeben in Masseprozent bezogen auf die Gesamtmasse der Lösung mit folgenden Anteilen:

| | |
|---|---|
| P₂O₅ | 30,0 bis 35,0 |
| Al₂O₃ | 7,0 bis 8,0 |
| Na₂O | 0,4 bis 1,0 |
| H₂O | 56,0 bis 60,0 |

Bei einer weiteren Ausführungsform enthält die Komponente K1 die Bestandteile Al(H₂PO₄)₃ und Al(NaHPO₄)₃ auf oxidischer Basis und angegeben in Masseprozent bezogen auf die Gesamtmasse der Lösung mit folgenden Anteilen:

| | |
|---|---|
| P₂O₅ | 31,0 bis 34,0 |
| Al₂O₃ | 7,5 bis 8,0 |
| Na₂O | 0,5 bis 0,8 |
| H₂O | 57,0 bis 59,0 |

Bei einer bestimmten Ausführungsform der vorliegenden Erfindung sind die Bestandteile Al(H₂PO₄)₃ und Al(NaHPO₄)₃ und Wasser in der Komponente K1 bezogen auf die Gesamtmasse der Lösung der Komponente K1 und angegeben in Masseprozent mit folgenden Anteilen enthalten:
- 40 bis 50% Al(H₂PO₄)₃
- 0,5 bis 2% Al(NaHPO₄)₃
- 42,5 bis 52,5% H₂O

Bei einer Ausführungsform der vorliegenden Erfindung sind die Bestandteile Magnesiumoxid, Silikat und Borat in der Komponente K2 auf oxidischer Basis und angegeben in Masseprozent bezogen auf die Gesamtmasse der Komponente K2 mit folgenden Anteilen enthalten:

| | |
|---|---|
| MgO | 80,0 bis 95,0 |
| SiO₂ | 1,0 bis 12,0 |
| B₂O₃ | 1,0 bis 2,0 |

Bei einer weiteren Ausführungsform der vorliegenden Erfindung sind die Bestandteile Magnesiumoxid, Silikat und Borat in der Komponente K2 auf oxidischer Basis und angegeben in Masseprozent bezogen auf die Gesamtmasse der Komponente K2 mit folgenden Anteilen enthalten:

| | |
|---|---|
| MgO | 72,0 bis 78,0 |
| SiO₂ | 9,0 bis 12,0 |
| B₂O₃ | 1,2 bis 1,8 |

Eine Ausführungsform der vorliegenden Erfindung ist dadurch gekennzeichnet, dass die Komponente K2 bezogen auf die Gesamtmasse der Komponente K2 und angegeben in Masseprozent wenigstens die folgenden Bestandteile umfasst:
- 60 bis 80% Magnesiumoxid
- 10 bis 20% Silikat
- 2 bis 20% Borat.

Die in der Komponente K2 enthaltenen Silikate liegen vorzugsweise in mineralischer oder glasiger Form, d. h. als Silikatminerale bzw. Glasfritten vor. Unter Silikatmineralen sind hier sowohl natürlich vorkommende als auch technische hergestellte Silikatminerale zu verstehen, wobei diese Silikatminerale vorzugsweise ausgewählt sind unter Talkum, Glimmer, Kaolin, Metakaolin, Bentonit, Wollastonit, Silikatglas und Kombinationen davon. Unter Glasfritten sind technisch hergestellte silikatbasierende Gläser zu verstehen.

Gemäß der vorliegenden Erfindung wird ein Magnesiumoxid eingesetzt, dessen Reaktivität, bestimmt nach dem Zitronensäuretest, in dem Bereich von 40 bis 400 Sekunden liegt. Bei einer bevorzugten Ausführungsform der Erfindung liegt die Reaktivität des Magnesiumoxids, bestimmt nach dem Zitronensäuretest, in dem Bereich von 40 bis 250 Sekunden.

Der Zitronensäuretest zur Bestimmung der Reaktivität des erfindungsgemäß eingesetzten Magnesiumoxids wird für Zwecke der vorliegenden Erfindung nach folgender Vorschrift durchgeführt:.

Zur Bestimmung der Zitronensäurezahl, mit der die Reaktivität des Magnesiumoxids ausgedrückt wird, wird die Zeit gemessen, in der eine vorgegebene Menge Zitronensäure durch eine vorgegebene Menge Magnesiumoxid neutralisiert wird. Hierfür werden 2,6 g Zitronensäure in 100 ml Wasser gelöst. Die auf diese Weise erzeugte Zitronensäurelösung wird zusammen mit 0,01 g Phenolphthalein zu einer Dispersion von 1,7 g Magnesiumoxid in 100 ml Wasser zugegeben, wobei die Temperatur des Wassers 22 °C betragen soll. Ab dem Moment der Zugabe der Zitronensäurelösung zu der Magnesiumoxiddispersion wird die Zeit gemessen, die vergeht, bis der Farbumschlag des Phenolphthalein von farblos nach rosa erfolgt. Je kürzer die Zeit ist, die vergeht, bis der Farbumschlag erfolgt, desto leichter sind die basischen Gruppen des Magnesiumoxids zur Neutralisation von Säuren verfügbar. Damit ist der Zitronensäuretest ein Maß für die Reaktivität des Magnesiumoxids, bestimmt anhand der Verfügbarkeit basischer Gruppen auf der durch Wasser benetzbaren Oberfläche des Magnesiumoxids.

Bestimmt nach dieser Testmethode sind erfindungsgemäß Magnesiumoxidqualitäten mit einer Zitronensäurezahl in dem Bereich von 40 bis 400 Sekunden erforderlich, da Magnesiumoxidqualitäten mit einer Zitronensäurezahl von < 40 Sekunden zu reaktiv sind, was dazu führen würde, dass die Hauptreaktion für die Nebenkomponenten, die für die spätere Beständigkeit der Beschichtung wichtig sind, zu schnell verläuft, so dass sich kein ausreichend glasiges Netzwerk bildet.

Andererseits sind Magnesiumoxidqualitäten mit einer Zitronensäurezahl von > 400 Sekunden nicht reaktiv genug, so dass die Hauptreaktion zu langsam verläuft und dementsprechend zu langsam Energie freigesetzt wird. Um ein ausreichend glasiges Netzwerk zu erreichen, muss daher bei solchen wenig reaktiven Magnesiumoxidqualitäten zusätzliche Energie von außen zugeführt werden, d. h. die geringere Reaktivität muss durch höhere Brenntemperaturen ausgeglichen werden.

Erfindungsgemäß liegt der Glühverlust der Komponente K2 nach Tempern für zwei Stunden bei 800 °C in dem Bereich von 0 bis 3,0 %. Liegt der Glühverlust der Komponente K2 nach Tempern für zwei Stunden bei 800 °C oberhalb von 3,0 %, so hat dies nachteilige Auswirkung auf die Reaktivität des in der Komponente K2 enthaltenen Magnesiumoxids, da dann zu viel Wasser in der Komponente K2 enthalten ist.

Darüber hinaus hat auch die Partikelgröße der Feststoffkomponente K2 einen Einfluss auf die Reaktivität. So kann im Falle von reaktiveren Magnesiumoxidqualitäten mit geringeren Korngrößen gearbeitet werden, während bei weniger reaktiveren Magnesiumoxidqualitäten vorzugsweise höhere Korngrößen gewählt werden. Vorzugsweise weist das Magnesiumoxid in der Komponente K2 eine maximale Partikelgröße von 100 µm auf.

Die Reaktivität von K1 und K2 ist erfindungsgemäß so abgestimmt, dass bei der Beschichtung eines Substrates mit dem erfindungsgemäßen Beschichtungssystem durch die bereits bei Raumtemperatur stattfindenden Reaktionen von K1 mit K2 schon nach wenigen Minuten eine relativ stabile Bindung an das jeweilige Substrat erreicht wird. In einem sich anschließenden Temperprozess polymerisiert die Beschichtungsmatrix homogen aus, verfestigt sich und bildet eine dauerhafte Verbindung mit dem Substrat.

Die beim Tempern zur vollständigen Abbindung, Polymerisation und Verfestigung des Systems notwendigen Temperaturen liegen in Abhängigkeit von Substrat, Anteil und Art des Funktionsstoffes sowie den Prozesszeiten der einzelnen Verfahrensschritte zwischen 140 und 200°C. Die erfindungsgemäße Stoffkombination mit den beanspruchten Anteilsverhältnissen ermöglicht also das Aushärten der auf ein Substrat aufgebrachten Beschichtungszusammensetzung bereits bei Temperaturen von weniger als 200°C. Vorzugsweise wird eine Aushärtetemperatur in dem Bereich von 140 bis 200°C gewählt. Besonders bevorzugt ist der Temperaturbereich von 140 bis 195°C, noch bevorzugter von 180 bis 195°C.

Während des Beschichtungsprozesses polymerisiert die flüssige Komponente K1 durch die Reaktion mit der Feststoffkomponente K2 unter Ausbildung einer glasigen, nicht kristallinen Beschichtung aus. In der Beschichtung verbleiben je nach Reaktionsablauf lediglich einige wenige nicht vollständig umgesetzte kristalline Anteile der Komponente K2. Die mit dem erfindungsgemäßen Beschichtungssystem erhaltenen Beschichtungen sind also dadurch gekennzeichnet, dass sie nicht kristallin sind sondern glasig. In dieses glasige System auf dem Substrat bzw. der zu beschichtenden Oberfläche können Funktionsstoffe besonders gut aufgenommen werden. Auf diese Weise können die Teilchen der Funktionsstoffe besonders gut an die Oberfläche des Substrats gebunden werden.

Ein Material ist im Zusammenhang mit der vorliegenden Erfindung dann als "glasig" bzw. als "Glas" zu bezeichnen, wenn das Material im festen Zustand ein Netzwerkgefüge mit einer Nahordnung aufweist aber kein kristallines Gitter mit einer kristallinen Fernordnung. Ob ein Glas im Sinne der vorliegenden Erfindung vorliegt, lässt sich für den Fachmann leicht durch Röntgenbeugungsanalyse ermitteln.

Das auspolymerisierte Beschichtungsmittel ist wasser- und witterungsbeständig und kann sowohl im Innen- als auch im Außenbereich vielfältig eingesetzt werden. So können unterschiedlichste dekorative Farbpigmente auf mineralische Trägermaterialien wie beispielsweise Sande oder Splitte aufgebracht werden, die dann in Wand- und Dachbeschichtungen als dekoratives und schützendes Element eingesetzt werden. Rostschutzpigmente können auf metallischen Oberflächen gebunden werden und sind bis zu vergleichsweise hohen Einsatztemperaturen stabil. Infrarotabsorbierende oder auch reflektierende Pigmente können je nach Aufgabenstellung im Innen- oder Außenbereich auf unterschiedlichste mineralische Baustoffe (wie z.B.: Dachziegeln, Glas, Fassadenplatten) aufgebracht werden, um das Temperaturmanagement in und an Gebäuden zu beeinflussen und zu steuern. Antimikrobiell wirkende Pigmente können auf Baumaterialien aufgebracht werden. Ebenso können Luminophore, d.h. im Dunkeln nachleuchtende Stoffe, z.B. in Form von mit lumineszenten Ionen dotierten Glaspartikeln, auf verschiedene Materialien aufgebracht werden, um z.B. Rettungswege bei plötzlichem Beleuchtungsausfall zu kennzeichnen.

Die in der flüssigen Komponente K1 des erfindungsgemäßen Beschichtungssystems enthaltenen Phosphatverbindungen haben leicht saure Eigenschaften und sollten daher vollständig abreagiert sein, wenn beispielsweise eine gute Wetterbeständigkeit der zur erzeugenden Beschichtung gewährleistet werden soll. Es ist daher auch aus diesem Grunde wesentlich, dass die in der Komponente K1 enthaltenen Phosphatverbindungen in den für die vorliegende Erfindung beanspruchten Bereichen eingesetzt werden.

Bei einer bevorzugten Ausführungsform der vorliegenden Erfindung enthält die Komponente K1 zusätzlich gelöste Borate, welche auf oxidischer Basis bezogen auf die Gesamtmasse der Lösung mit bis zu 1,5 Masseprozent B₂O₃ in der Komponente K1 enthalten sind. Beispiele für in diesem Zusammenhang verwendbare Borate sind ohne Beschränkung hierauf Borsäure, Natriumborat, Calciumborat, Aluminiumborat und Zinkborat. Die Borate haben in dem erfindungsgemäßen Beschichtungssystem die Aufgabe, die Glasbildung zu fördern und insgesamt den glasigen Anteil der Beschichtung zu erhöhen.

Eine Ausführungsform des erfindungsgemäßen Beschichtungssystems ist dadurch gekennzeichnet, dass die Komponente K1 zusätzlich gelöste Silikate enthält, welche auf oxidischer Basis bezogen die Gesamtmasse der Lösung mit bis zu 1,0 Masseprozent SiO₂ in der Komponente K1 enthalten sind. Durch den Zusatz von Silikaten zu der Komponente K1 kann die Komponente K1 in vielen Fällen besser am Substrat angreifen. Vorzugsweise sind die der Komponente K1 optional zuzusetzenden Silikate ausgewählt unter gut löslichen Alkalisilikaten, wie beispielsweise Natriummetasilikat, Natriumdisilikat, oder Kaliumsilikat.

Bei einer noch weiteren Ausführungsform der vorliegenden Erfindung werden der Komponente K1 zusätzlich lösliche Fluoride zugegeben, welche auf oxidischer Basis bezogen auf die Gesamtmasse der Lösung mit bis zu 1,0 Masseprozent F⁻ in der Komponente K1 enthalten sind. Durch den Zusatz von Fluoriden zu der Komponente K1 wird die Reaktivität der Komponente K1 gegenüber verschiedenen Substraten verbessert.

Bei einer bestimmten Ausführungsform der vorliegenden Erfindung enthält die Komponente K1 als zusätzlichen Bestandteil einen Anteil Mg(H₂PO₄)₂ (=Magnesiumdihydrogenphosphat bzw. Monomagnesiumphosphat). Vorzugsweise beträgt der Anteil des Magnesiumdihydrogenphosphats bezogen auf die Gesamtmasse der Lösung der Komponente K1 bis zu 7 Masseprozent. Bei einer besonders bevorzugten Ausführungsform der vorliegenden Erfindung mit Magnesiumdihydrogenphosphat in der Komponente K1 weist die Komponente K1 angegeben in Masseprozent und bezogen auf die Gesamtmasse der Komponenten K1 wenigstens die folgenden Bestandteile auf:
- 40 bis 50% Al(H₂PO₄)₃
- bis zu 7% Mg(H₂PO₄)₂
- 0,5 bis 2% Al(NaHPO₄)₃
- 42,5 bis 52,5% H₂O

Auch der Komponente K2 des erfindungsgemäßen Beschichtungssystems können weitere Stoffe zugesetzt werden, um die Beschichtungseigenschaften des Beschichtungssystems weiter zu verbessern. Beispielsweise werden der Komponente K2 bei bestimmten Ausführungsformen der Erfindung Borate des Calciums, des Aluminiums und/oder des Zinks bzw. Mischungen daraus zugesetzt.

Auch die der Komponente K2 zugesetzten Borate führen zu einer Verbesserung der Glasbildung beim Beschichtungsprozess. Vorzugsweise sind Borate des Calciums auf oxidischer Basis und angegeben in Masseprozent bezogen auf die Gesamtmasse der Komponente K2 mit einem Anteil von bis zu 5,0 Masseprozent CaO in der Komponente K2 enthalten. Der Anteil an Aluminiumboraten beträgt auf oxidischer Basis und angegeben in Masseprozent bezogen auf die Gesamtmasse der Komponente K2 vorzugsweise 7,5 bis 15,0 Masseprozent Al₂O₃, vorzugsweise 7,5 bis 10,0 Masseprozent Al₂O₃, noch bevorzugter 7,5 bis 9,0 Masseprozent Al₂O₃. Borate des Zinks sind in der Komponente K2 vorzugsweise mit bis zu 4,5 Masseprozent ZnO enthalten. Zinkborate sind besonders bevorzugt, da sie die Wetterbeständigkeit der Beschichtung bereits bei vergleichsweise tiefen Brenntemperaturen deutlich erhöhen können, in dem sie die Verknüpfung der einzelnen Komponenten und Bestandteile der Beschichtung fördern.

Bei einer bestimmten Ausführungsform des erfindungsgemäßen Beschichtungssystems enthält die Komponente K2 als weitere Bestandteile zusätzlich Titanoxid und/oder Zinkoxid. Vorzugsweise sind diese Bestandteile auf oxidischer Basis und angegeben in Masseprozent bezogen auf die Gesamtmasse der Komponente K2 mit folgenden Anteilen in der Komponente 2 enthalten:
bis zu 1,0 Masseprozent TiO₂ und/oder
bis zu 4,5 Masseprozent ZnO.

Je nachdem welches Substrat zu beschichten ist, welcher Funktionsstoff mit dem erfindungsgemäßen Beschichtungssystem aufgebracht werden soll und welche speziellen Eigenschaften die mit dem erfindungsgemäßen Beschichtungssystem erzeugte Beschichtung aufweisen soll, ist das Mischungsverhältnis von Komponente K1 zu Komponente K2 einzustellen. Vorzugsweise liegt das Mischungsverhältnis von K1 zu K2 in dem Bereich von 5:1 bis 10:1.

Wie eingangs bereits erwähnt wurde, hat das erfindungsgemäße Beschichtungssystem insbesondere den Vorteil, dass mit diesem die unterschiedlichsten Funktionsstoffe auf ein Substrat aufgebracht werden können. Bei diesen Funktionsstoffen kann es sich beispielsweise um Farbpigmente (wie Chromoxidgrün, Eisenoxidrot oder -schwarz), katalytisch aktive Pigmente (wie Titandioxid in Rutimodifikation), biozide oder fungizide Stoffe (wie Silber oder Silberverbindungen) oder fluoreszierende Stoffe (wie Fluoreszenz-Glas) handeln. Bei den Funktionsstoffen kann es sich jedoch auch um solche Stoffe handeln, die die Oberflächenstruktur (wie feiner Sand), den elektrischen Widerstand (wie Graphit), den Wärmewiderstand (wie Polystyrol) oder die Reflektionseigenschaften (wie Metalleffektpartikel) verändern. Vorzugsweise handelt es sich bei den Funktionsstoffen um anorganische Funktionsstoffe.

Bei einer Ausführungsform der Erfindung werden die vorgenannten Funktionsstoffe als Bestandteil der Komponente K1 bereitgestellt. Bei einer alternativen Ausführungsform werden die Funktionsstoffe als Bestandteil der Komponente K2 bereitgestellt. Bei einer noch weiteren Ausführungsform werden die Funktionsstoffe als Bestandteil einer zusätzlichen Komponente K3 bereitgestellt, wobei diese zusätzliche Komponente K3 als Feststoff, Flüssigkeit, Lösung oder Suspension bereitgestellt werden kann.

Das erfindungsgemäße Beschichtungssystem hat den Vorteil, dass eine sehr gute Benetzung des zu beschichtenden Substrats und eine hohe Haftung der Beschichtung am Substrat erreicht wird. Darüber hinaus kann mit dem erfindungsgemäßen Beschichtungssystem auch eine Beschichtung mit sehr dünner Schichtdicke erzeugt werden. Dies hat den Vorteil, dass in den Fällen, bei denen ein optisch aktiver Funktionsstoff in die Beschichtung eingearbeitet wird, die Beschichtung auch nach dem Abbinden im jeweils relevanten Spektralbereich ausreichend transparent ist, um die Eigenschaften des Funktionsstoffes so wenig wie möglich zu beeinflussen.

Um mit dem erfindungsgemäßen Beschichtungssystem eine gewünschte Beschichtung auf einem Substrat zu erzeugen, können verschiedene Verfahren Anwendung finden. Allen Verfahren gemein ist lediglich, dass man die flüssige Komponente K1 des erfindungsgemäßen Beschichtungssystems mit der festen Komponente K2 des erfindungsgemäßen Beschichtungssystems zu einem bestimmten Zeitpunkt des Verfahrens in Kontakt bringt.

Liegen Substrat und der auf dem Substrat aufzubringende Funktionsstoff pulver- oder granulatförmig vor, wird vorzugsweise zunächst die erfindungsgemäße Komponente K2 in Pulverform fein auf der Oberfläche des zu beschichtenden Substrats verteilt. Dazu kann die Komponente K2 beispielsweise mit dem pulver- oder granulatförmigen Substrat intensiv vermischt werden. Wenn auf die Oberfläche des Substrats ein Funktionsstoff aufgebracht werden soll, so kann dieser entweder gleichzeitig mit der Komponente K2 appliziert werden oder der Funktionsstoff kann der flüssigen Komponente K1 zugegeben und in dieser dispergiert werden. Welche Variante dabei gewählt wird, ist u. a. davon abhängig, in welcher Form der aufzubringende Funktionsstoff vorliegt, welche Teilchengröße und Teilchengrößenverteilung gegeben ist und ob der aufzubringende Funktionsstoff in der leicht sauren Komponente K1 stabil ist.

Liegt das Substrat jedoch nicht in einer mischbaren Form vor, so kann die Komponente K2 auch mit anderen Verfahren, die dazu geeignet sind, Pulver auf Oberflächen zu applizieren, aufgetragen werden. Beispielsweise ist es auch möglich, die Komponente K2 in Pulverform in einer Flüssigkeit, wie z. B. Wasser, zu dispergieren und als Dispersion auf das Substrat aufzutragen. Die Flüssigkeit muss dann allerdings vor einer Weiterverarbeitung wieder entfernt werden.

Der auf die Oberfläche aufzubringende Funktionsstoff kann auch in diesem Fall entweder gleichzeitig mit der Komponente K2 appliziert werden. Alternativ kann der Funktionsstoff der flüssigen Komponente K1 zugegeben und in dieser dispergiert werden. Auch hier hängt die Auswahl des jeweiligen Verfahrens davon ab, in welcher Form der aufzubringende Funktionsstoff vorliegt, welche Teilchengröße und Teilchengrößeverteilung gegeben ist und ob der aufzubringende Funktionsstoff in der leicht sauren Komponente K1 stabil ist.

Auf das mit der Komponente K2 (und ggf. mit dem aufzubringenden Funktionsstoff) beschichtete Substrat wird anschließend die Komponente K1 aufgetragen, was beispielsweise durch Einmischen erfolgen kann, wenn das Substrat als mischbarer Formkörper vorliegt. Alternativ kann die Komponente K1 auch durch Aufsprühen, Tauchen, Walzen oder Streichen aufgetragen werden.

Eine weitere Möglichkeit der Anwendung des erfindungsgemäßen Beschichtungssystems ist die direkte Auftragung eines Gemisches der Komponenten K1 und K2 ggf. in Kombination mit einem Funktionsstoff. Diese Auftragungstechnologie ist dann vorteilhaft, wenn die Schichtdicke der resultierenden Beschichtung vergleichsweise groß werden soll, wenn der Funktionsstoff schlecht benetzbar und/oder auftragbar ist, so wie wenn die Beschichtungsreaktion sehr schnell ablaufen soll. In diesem Fall kann es vorteilhaft sein, die Flüssigkomponente K1 vor dem Vermischen zu kühlen und/oder die Feststoffkomponente K2 mit geeigneten Materialien zu beschichten, um die Reaktivität zu senken und eine längere Verarbeitungszeit zu erhalten.

Indem man die flüssige Komponente K1 des erfindungsgemäßen Beschichtungssystems mit der festen Komponente K2 des erfindungsgemäßen Beschichtungssystems beim Beschichten in Kontakt bringt, erhält man eine Beschichtung, die im wesentlichen aus einer auspolymerisierten Kombination der flüssigen Komponente K1 und der festen Komponente K2 gegebenenfalls kombiniert mit einem Funktionsstoff besteht. Eine auf diese Weise erhaltene glasige Beschichtung ist von der vorliegenden Erfindung umfasst, ebenso wie ein Gegenstand, dessen Oberfläche mit dem erfindungsgemäßen Beschichtungssystem, nach dem erfindungsgemäßen Verfahren oder mit der erfindungsgemäßen glasigen Beschichtung beschichtet ist.

Vorzugsweise handelt es sich bei dem zu beschichtenden bzw. beschichteten Substrat oder Gegenstand um ein Substrat oder einen Gegenstand aus einem anorganischen Material, wobei dieses anorganische Material vorzugsweise ausgewählt ist unter Quarzsand, Tonschiefer, Tonziegel, Tonstein, Ziegelstein und Silikatglas.

Eine mit dem erfindungsgemäßen Beschichtungssystem erzeugte Beschichtung setzt sich zusammen aus den in den Komponenten K1 und K2 enthaltenen Bestandteile und gegebenenfalls einem oder mehreren mit der Beschichtung auf die Oberfläche eines Substrats aufzubringenden Funktionsstoff. Bei einem Mischungsverhältnis von 7 Teilen K1 zu 1 Teil K2 ergibt sich auf oxidischer Basis beispielsweise folgende Beschichtungszusammensetzung

| **Bestandteil** | **Masse %** |
|---|---|
| P₂O₅ | 21,9 - 32,4 |
| B₂O₃ | 0,2 - 1,7 |
| SiO₂ | 1,0 - 3,3 |
| Al₂O₃ | 6,0 - 9,8 |
| Na₂O | 0,2 - 2,1 |
| MgO | 8,1 - 11,1 |

Zusätzlich kann die oben angegebene Beschichtungszusammensetzung auch noch folgende Anteile an Calciumoxid (z.B. Verunreinigung aus Silikatmineralen), Zinkoxid und Titanoxid aufweisen:

| **Bestandteil** | **Masse %** |
|---|---|
| CaO | 0 - 0,6 |
| ZnO | 0 - 0,6 |
| TiO₂ | 0,0 - 0,1 |

Für Zwecke der ursprünglichen Offenbarung wird darauf hingewiesen, dass sämtliche Merkmale, wie sie sich aus der vorlegenden Beschreibung und den anhängenden Ansprüchen für einen Fachmann erschließen, auch wenn sie konkret nur im Zusammenhang mit bestimmten weiteren Merkmalen beschrieben wurden, sowohl einzeln als auch im beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Des Weiteren wird darauf hingewiesen, dass es für den Fachmann selbstverständlich ist, dass die nachfolgenden Ausführungsbeispiele lediglich dazu dienen, die als Ausführungsbeispiele wiedergegebenen möglichen Ausführungsformen der vorlegenden Erfindung beispielhaft anzugeben. Der Fachmann wird daher ohne Weiteres verstehen, dass darüber hinaus auch an andren Ausführungsformen, die die in den Ansprüchen genannten erfindungsgemäßen Merkmale oder Merkmalskombinationen aufweisen, innerhalb des Schutzumfangs der Erfindung liegen. Auf die umfassende, explizite Darstellung sämtlicher denkbarer Ausführungsformen wird hier nur der Kürze und der Lesbarkeit der Beschreibung wegen verzichtet.

### Ausführungsbeispiele:

### Beispiel 1

### Bindung von Schwarzpigment (Eisenoxidschwarz, Pigment Black 11 von Heucodur) auf einem Quarzsandsubstrat Partikelgröße: 0,3-0,8 mm und einem SiO₂ Anteil von >98%

**K1: Lösung**

| Rohstoff | Masse (%) |
|---|---|
| Wasser | 48,5 |
| Monoaluminiumphosphat | 43,0 |
| Monomagnesiumphosphat | 7,0 |
| Natriumtetraborat | 1,5 |

**K2: Pulvermischung**

| Rohstoff | Masse (%) |
|---|---|
| Magnesiumoxid | 70 |
| Metakaolin | 20 |
| Calciummetaborat | 10 |

### Beispiel 2

### Bindung von Rotpigment (Eisenoxidrot, Pigment Red 101) auf Schiefersplitt (1,0-3,0 mm)

**K1: Lösung**

| Rohstoff | Masse (%) |
|---|---|
| Wasser | 49,0 |
| Monoaluminiumphosphat | 49,0 |
| Natriumhydroxid | 2,0 |

**K2: Pulvermischung**

| Rohstoff | Masse (%) |
|---|---|
| Magnesiumoxid | 70,6 |
| Kaolin | 13,4 |
| Glimmer | 5,0 |
| Aluminiumborat | 11,0 |

### Beispiel 3

### Bindung von fluoreszierenden Glasperlen (Ø <100µm) auf Silicatglas

**K1: Lösung**

| Rohstoff | Masse (%) |
|---|---|
| Wasser | 49,0 |
| Monoaluminiumphosphat | 49,0 |
| Natriumhydroxid | 1,0 |
| Natriumtetraborat | 1,0 |

**K2: Pulvermischung**

| Rohstoff | Masse (%) |
|---|---|
| Magnesiumoxid | 94,0 |
| Metakaolin | 1,0 |
| Bentonit | 1,0 |
| Zinkborat | 2,0 |
| ZnO | 2,0 |

### Beispiel 4

### Bindung von Polystyrolkugeln (Ø 0,5-1,5 mm) auf Keramiksubstrat

**K1: Lösung**

| Rohstoff | Masse (%) |
|---|---|
| Wasser | 49,0 |
| Monoaluminiumphosphat | 49,0 |
| Natriumhydroxid | 1,0 |
| Natriumtetraborat | 1,0 |

**K2: Pulvermischung**

| Rohstoff | Masse (%) |
|---|---|
| Magnesiumoxid | 76,0 |
| Metakaolin | 15,0 |
| Talkum | 5,0 |
| Zinkborat | 2,0 |
| ZnO | 2,0 |

### Ergebnisse

### Beurteilung der Bindungskraft und der Wasserbeständigkeit der Bindung (Kochtest)

Für die Bestimmung der Bindungskraft und der Bindungsstärke einer mit dem erfindungsgemäßen Beschichtungssystem erzeugten Beschichtung wird ein Verfahren angewendet, das im folgenden als Kochtest bezeichnet wird.

Für den Kochtest wird ein Substrat mit dem erfindungsgemäßen Beschichtungssystem beschichtetes Substrat, wobei die auf diese Weise erzeugte Beschichtung ein Pigment enthält. Nach vollständigem Aushärten der Beschichtung, wird das beschichtete Substrat in Wasser 30 min lang ohne weiteres Rühren bei 100°C gekocht. Sich dabei ablösendes Pigment führt zu einer Trübung des Kochwassers. Diese Trübung wird nun gemessen. Je geringer der Trübungswert ausfällt, umso besser sind die Stärke und die Wasserbeständigkeit der Bindung der Beschichtung.

Die Bestimmung ist keine Absolut- sondern eine Relativmethode, d.h. durch diese Methode können nicht unterschiedliche Beschichtungsmittel in unterschiedlichen Substrat/Pigmentkombinationen miteinander verglichen werden. Es können lediglich unterschiedliche Beschichtungsmittel innerhalb einer Substrat/Pigmentkombination mit einander verglichen werden.
Für den Standardtest wird das Schwarzpigment (Pigment Black 11 von Heucodur) in Kombination mit einem Quarzsand, einem Schiefersplitt oder einem Silicatglaspulver verwendet. Die Menge Pigment und die Menge an Beschichtungsmittel richten sich nach dem zu testenden Substrat.

## Patentansprüche

1. Beschichtungssystem zur Erzeugung einer glasigen Beschichtung, **dadurch gekennzeichnet, dass** es wenigstens eine flüssige Komponente K1 und wenigstens eine feste Komponente K2 umfasst, wobei
die Komponente K1 eine wässrige Lösung ist, die wenigstens die Bestandteile
- Al(H₂PO₄)₃ und
- Al(NaHPO₄)₃,
enthält, wobei die genannten Bestandteile der Komponente K1 auf oxidischer Basis und angegeben in Masseprozent bezogen auf die Gesamtmasse der Lösung mit folgenden Anteilen in der Komponente K1 enthalten sind:
| | |
|---|---|
| P₂O₅ | 25,0 bis 37,0 |
| Al₂O₃ | 5,8 bis 9,0 |
| Na₂O | 0,1 bis 2,0 |
| H₂O | 54,0 bis 66,0 |
und wobei
die Komponente K2 wenigstens die Bestandteile
- Magnesiumoxid,
- Silikat und
- Borat
umfasst, die auf oxidischer Basis und angegeben in Masseprozent bezogen auf die Gesamtmasse der Komponente K2 mit folgenden Anteilen in der Komponente K2 enthalten sind:
| | |
|---|---|
| MgO | 70,0 bis 95,0 |
| SiO₂ | 1,0 bis 19,0 |
| B₂O₃ | 1,0 bis 3,0 |
wobei die Reaktivität des Magnesiumoxids, bestimmt nach dem Zitronensäuretest, in dem Bereich von 40 bis 400 Sekunden liegt,
und wobei der Glühverlust der Komponente K2 nach Tempern für 2 Stunden bei 800 °C in dem Bereich von 0 bis 3,0 % liegt.

2. Beschichtungssystem nach Anspruch 1, **dadurch gekennzeichnet, dass** die Komponente K1 zusätzlich gelöste Borate enthält, welche auf oxidischer Basis und angegeben in Masseprozent bezogen auf die Gesamtmasse der Lösung mit bis zu 1,5 Masseprozent B₂O₃ in der Komponente K1 enthalten sind.

3. Beschichtungssystem nach einem der vorangegangenen Ansprüche, **dadurch gekennzeichnet, dass** die Komponente K1 zusätzlich gelöste Silikate enthält, welche auf oxidischer Basis und angegeben in Masseprozent bezogen auf die Gesamtmasse der Lösung mit bis zu 1,0 Masseprozent SiO₂ in der Komponente K1 enthalten sind.

4. Beschichtungssystem nach einem der vorangegangenen Ansprüche, **dadurch gekennzeichnet, dass** die Komponente K1 zusätzlich gelöste Fluoride enthält, welche auf oxidischer Basis und angegeben in Masseprozent bezogen auf die Gesamtmasse der Lösung mit bis zu 1,0 Masseprozent F⁻ in der Komponente K1 enthalten sind.

5. Beschichtungssystem nach einem der vorangegangenen Ansprüche, **dadurch gekennzeichnet, dass** die Komponente K2 Borate des Calciums, des Aluminiums und/oder des Zinks bzw. Mischungen daraus enthält, die auf oxidischer Basis und angegeben in Masseprozent bezogen auf die Gesamtmasse der Komponente K2 mit folgenden Anteilen in der Komponente K2 enthalten sind:
bis zu 5,0 Masseprozent CaO,
7,5 bis 15,0 Masseprozent Al₂O₃
bis zu 4,5 Masseprozent ZnO.

6. Beschichtungssystem nach einem der vorangegangenen Ansprüche, **dadurch gekennzeichnet, dass** das Silikat in der Komponente K2 in mineralischer Form vorliegt, ausgewählt unter Talkum, Glimmer, Kaolin, Metakaolin, Bentonit, Wollastonit, Silikatglas und Kombinationen davon.

7. Beschichtungssystem nach einem der vorangegangenen Ansprüche, **dadurch gekennzeichnet, dass** das Mischungsverhältnis von Komponente K1 zu Komponente K2 in dem Bereich von 5:1 bis 10:1 liegt.

8. Beschichtungssystem nach einem der vorangegangenen Ansprüche, **dadurch gekennzeichnet, dass** es als Bestandteil der Komponente K1, als Bestandteil der Komponente K2 und/oder als Bestandteil einer zusätzlichen Komponente K3 einen Stoff umfasst, der ausgewählt ist unter Funktionspigmenten, wie Farbpigmenten, katalytisch aktiven Pigmenten, bio- oder fungiziden Stoffen, fluoreszierenden Stoffen oder Stoffen, die die Oberflächenstruktur, den elektrischen Widerstand, den Wärmewiderstand oder die Reflexionseigenschaften einer Oberfläche verändern.

9. Beschichtungssystem nach einem der vorangegangenen Ansprüche, **dadurch gekennzeichnet, dass** die Komponente K1 angegeben in Masseprozent bezogen auf die Gesamtmasse der Komponente K1 wenigstens die folgenden Bestandteile umfasst:
- 40 bis 50 % Al(H₂PO₄)₃
- bis zu 7 % Mg(H₂PO₄)₂
- 0,5 - 2 % Al(NaHPO₄)₃
- 42,5 bis 52,5 % H₂O

10. Beschichtungssystem nach einem der vorangegangenen Ansprüche, **dadurch gekennzeichnet, dass** die Komponente K2 angegeben in Masseprozent bezogen auf die Gesamtmasse der Komponente K2 wenigstens die folgenden Bestandteile umfasst:
- 60 bis 80 % MgO
- 10 bis 20 % Silikat
- 2 bis 20 % Borat

11. Verfahren zur Erzeugung einer glasigen Beschichtung, bei dem man die flüssige Komponente K1 des Beschichtungssystems nach einem der vorangegangenen Ansprüche mit der festen Komponente K2 des Beschichtungssystems nach einem der vorangegangenen Ansprüche miteinander in Kontakt bringt.

12. Glasige Beschichtung aus einer auspolymerisierten Kombination aus einer flüssigen Komponente K1 des Beschichtungssystems nach einem der vorangegangenen Ansprüche mit einer festen Komponente K2 des Beschichtungssystems nach einem der vorangegangenen Ansprüche.

13. Gegenstand, dessen Oberfläche nach dem Verfahren von Anspruch 11 oder mit einer Beschichtung nach Anspruch 12 beschichtet ist.

14. Verfahren nach Anspruch 11, Beschichtung nach Anspruch 12 oder Gegenstand nach Anspruch 13, **dadurch gekennzeichnet, dass** die Beschichtung auf einem anorganischen Material erfolgt oder vorliegt.

15. Verfahren nach Anspruch 11, Beschichtung nach Anspruch 12 oder Gegenstand nach Anspruch 13, **dadurch gekennzeichnet, dass** die Beschichtung auf oxidischer Basis und angegeben in Masseprozent Trockenstoff die angegebenen Bestandteile mit folgenden Anteilen umfasst:
| | |
|---|---|
| P₂O₅ | 21,9 bis 32,4 |
| Al₂O₃ | 6,0 bis 9,8 |
| Na₂O | 0,2 bis 2,1 |
| MgO | 8,1 bis 11,1 |
| SiO₂ | 1,0 bis 3,3 |
| B₂O₃ | 0,2 bis 1,7. |

## Claims

1. A coating system for producing a vitreous coating **characterised in that** it includes at least one liquid component K1 and at least one solid component K2, wherein
the component K1 is an aqueous solution which contains at least the constituents
- Al(H₂PO₄)₃ and
- Al(NaHPO₄)₃,
wherein said constituents of the component K1 are contained on an oxide basis and specified in mass percent with respect to the total mass of the solution with the following proportions in the component K1:
| | |
|---|---|
| - P₂O₅ | between 25.0 and 37.0 |
| - Al₂O₃ | between 5.8 and 9.0 |
| - Na₂O | between 0.1 and 2.0 |
| - H₂O | between 54.0 and 66.0 |
and wherein
the component K2 includes at least the constituents
- magnesium oxide,
- silicate and
- borate
which are contained on an oxide basis and specified in mass percent with respect to the total mass of the component K2 with the following proportions in the component K2:
| | |
|---|---|
| MgO | between 70.0 and 95.0 |
| SiO₂ | between 1.0 and 19.0 |
| B₂O₃ | between 1.0 and 3.0 |
wherein the reactivity of the magnesium oxide determined in accordance with the citric acid test is in the range of between 40 and 400 seconds,
and wherein the ignition loss of the component K2 after tempering for 2 hours at 800°C is in the range of between 0 and 3.0%.

2. A coating system as set forth in claim 1 **characterised in that** the component K1 additionally contains dissolved borates which are contained on an oxide basis and specified in mass percent with respect to the total mass of the solution with up to 1.5 mass percent of B₂O₃ in the component K1.

3. A coating system as set forth in one of the preceding claims **characterised in that** the component K1 additionally contains dissolved silicates which are contained on an oxide basis and specified in mass percent with respect to the total mass of the solution with up to 1.0 mass percent of SiO₂ in the component K1.

4. A coating system as set forth in one of the preceding claims **characterised in that** the component K1 additionally contains dissolved fluorides which are contained on an oxide basis and specified in mass percent with respect to the total mass of the solution with up to 1.0 mass percent of F⁻ in the component K1.

5. A coating system as set forth in one of the preceding claims **characterised in that** the component K2 contains borates of calcium, aluminum and/or zinc or mixtures thereof which are contained on an oxide basis and specified in mass percent with respect to the total mass of the component K2 with the following proportions in the component K2:
up to 5.0 mass percent of CaO,
between 7.5 and 15.0 mass percent of Al₂O₃, and
up to 4.5 mass percent of ZnO.

6. A coating system as set forth in one of the preceding claims **characterised in that** the silicate is present in the component K2 in mineral form, selected from talcum, mica, kaolin, metakaolin, bentonite, wollastonite, silicate glass and combinations thereof.

7. A coating system as set forth in one of the preceding claims **characterised in that** the mixture ratio of component K1 to component K2 is in the range of between 5:1 and 10:1.

8. A coating system as set forth in one of the preceding claims **characterised in that** as a constituent of component K1, as a constituent of component K2 and/or as a constituent of an additional component K3, it includes a substance selected from functional pigments like color pigments, catalytically active pigments, bio- or fungicidal substances, fluorescent substances or substances which alter the surface structure, the electrical resistance, the thermal resistance or the reflection properties of a surface.

9. A coating system as set forth in one of the preceding claims **characterised in that** the component K1 specified in mass percent with respect to the total mass of the component K1 includes at least the following constituents:
- between 40 and 50% of Al(H₂PO₄)₃
- up to 7% of Mg(H₂PO₄)₂
- between 0.5 and 2% of Al(NaHPO₄)₃
- between 42.5 and 52.5% of H₂O.

10. A coating system as set forth in one of the preceding claims **characterised in that** the component K2 specified in mass percent with respect to the total mass of the component K2 includes at least the following constituents:
- between 60 and 80% of MgO
- between 10 and 20% of silicate
- between 2 and 20% of borate.

11. A coating method for producing a vitreous coating in which the liquid component K1 of the coating system as set forth in one of the preceding claims is brought into contact with the solid component K2 of the coating system as set forth in one of the preceding claims.

12. Vitreous coating including a polymerized combination of a liquid component K1 of the coating system as set forth in one of the preceding claims with a solid component K2 of the coating system as set forth in one of the preceding claims.

13. An object whose surface is coated in accordance with the method of claim 11 or with a coating as set forth in claim 12.

14. A method as set forth in claim 11, a coating as set forth in claim 12 or an object as set forth in claim 13 **characterised in that** the coating is effected or is on an inorganic material.

15. A method as set forth in claim 11, a coating as set forth in claim 12 or an object as set forth in claim 13 **characterised in that** the coating on an oxide basis and specified in mass percent of dry substance includes the specified constituents with the following proportions:
| | |
|---|---|
| P₂O₅ | between 21.9 and 32.4 |
| Al₂O₃ | between 6.0 and 9.8 |
| Na₂O | between 0.2 and 2.1 |
| MgO | between 8.1 and 11.1 |
| SiO₂ | between 1.0 and 3.3 |
| B₂O₃ | between 0.2 and 1.7. |

## Revendications

1. Système de revêtement permettant de créer un revêtement vitreux, **caractérisé en ce qu'**il comprend au moins un composant liquide K1 et au moins un composant solide K2, dans lequel
le composant K1 est une solution aqueuse qui contient au moins les constituants
- Al(H₂PO₄)₃ et
- Al(NaHPO₄)₃,
où lesdits constituants du composant K1 sont contenus dans le composant K1 dans les proportions ci-dessous, sur la base des oxydes et en pourcentage en masse par rapport à la masse totale de la solution :
| | |
|---|---|
| P₂O₅ | 25,0 à 37,0, |
| Al₂O₃ | 5,8 à 9,0, |
| Na₂O | 0,1 à 2,0, |
| H₂O | 54,0 à 66,0, |
et dans lequel
le composant K2 comprend au moins les constituants
- oxyde de magnésium,
- silicate, et
- borate,
qui sont contenus dans le composant K2 dans les proportions ci-dessous, sur la base des oxydes et en pourcentage en masse par rapport à la masse totale du composant K2 :
| | |
|---|---|
| MgO | 70,0 à 95,0, |
| SiO₂ | 1,0 à 19,0, |
| B₂O₃ | 1,0 à 3,0, |
dans lequel la réactivité de l'oxyde de magnésium, déterminée grâce au test à l'acide citrique, se situe dans la plage comprise entre 40 et 400 secondes,
et dans lequel la perte par calcination du composant K2 après un recuit de 2 heures à 800 °C se situe dans la plage comprise entre 0 et 3,0 %.

2. Système de revêtement selon la revendication 1, **caractérisé en ce que** le composant K1 contient en outre des borates dissous qui sont contenus dans le composant K1 avec jusqu'à 1,5 % en masse de B₂O₃, sur la base des oxydes et en pourcentage en masse par rapport à la masse totale de la solution.

3. Système de revêtement selon l'une des revendications précédentes, **caractérisé en ce que** le composant K1 contient en outre des silicates dissous qui sont contenus dans le composant K1 avec jusqu'à 1,0 % en masse de SiO₂, sur la base des oxydes et en pourcentage en masse par rapport à la masse totale de la solution.

4. Système de revêtement selon l'une des revendications précédentes, **caractérisé en ce que** le composant K1 contient en outre des fluorures dissous qui sont contenus dans le composant K1 avec jusqu'à 1,0 % en masse de F, sur la base des oxydes et en pourcentage en masse par rapport à la masse totale de la solution,.

5. Système de revêtement selon l'une des revendications précédentes, **caractérisé en ce que** le composant K2 contient des borates du calcium, de l'aluminium et/ou du zinc ou bien des mélanges de ceux-ci, qui sont contenus dans le composant K2 dans les proportions ci-dessous, sur la base des oxydes et en pourcentage en masse par rapport à la masse totale du composant K2 :
jusqu'à 5,0 % en masse de CaO,
7,5 à 15,0 % en masse d'Al₂O₃
jusqu'à 4,5 % en masse de ZnO.

6. Système de revêtement selon l'une des revendications précédentes, **caractérisé en ce que** le silicate est présent dans le composant K2 sous une forme minérale choisie parmi talc, mica, kaolin, métakaolin, bentonite, wollastonite, verre de silice et des combinaisons de ceux-ci.

7. Système de revêtement selon l'une des revendications précédentes, **caractérisé en ce que** le rapport de mélange du composant K1 au composant K2 se situe dans la plage comprise entre 5:1 et 10:1.

8. Système de revêtement selon l'une des revendications précédentes, **caractérisé en ce qu'**il comprend, en tant que constituant du composant K1, en tant que constituant du composant K2 et/ou en tant que constituant d'un composant supplémentaire K3 une substance qui est choisie parmi des pigments fonctionnels, tels que des pigments de couleur, des pigments catalytiquement actifs, des substances biocides ou fongicides, des substances fluorescentes ou des substances modifiant la structure superficielle, la résistance électrique, la résistance thermique ou les propriétés de réflexion d'une surface.

9. Système de revêtement selon l'une des revendications précédentes, **caractérisé en ce que** le composant K1 comprend au moins les constituants suivants, en pourcentage en masse par rapport à la masse totale du composant K1 :
- 40 à 50 % d'Al(H₂PO₄)₃,
- jusqu'à 7 % de Mg(H₂PO₄)₂,
- 0,5 à 2 % d'Al(NaHPO₄)₃,
- 42,5 à 52,5 % de H₂O.

10. Système de revêtement selon l'une des revendications précédentes, **caractérisé en ce que** le composant K2 comprend au moins les constituants suivants, en pourcentage en masse par rapport à la masse totale du composant K2 :
- 60 à 80 % de MgO,
- 10 à 20 % de silicate,
- 2 à 20 % de borate.

11. Procédé de création d'un revêtement vitreux, dans lequel le composant liquide K1 du système de revêtement selon l'une des revendications précédentes est mis en contact avec le composant solide K2 du système de revêtement selon l'une des revendications précédentes.

12. Revêtement vitreux issu d'une combinaison polymérisée d'un composant liquide K1 du système de revêtement selon l'une quelconque des revendications précédentes avec un composant solide K2 du système de revêtement selon l'une des revendications précédentes.

13. Article dont la surface est revêtue selon le procédé de la revendication 11 ou avec un revêtement selon la revendication 12.

14. Procédé selon la revendication 11, revêtement selon la revendication 12 ou article selon la revendication 13, **caractérisé en ce que** le revêtement se fait ou se trouve sur un matériau inorganique.

15. Procédé selon la revendication 11, revêtement selon la revendication 12 ou article selon la revendication 13, **caractérisé en ce que** le revêtement comprend les constituants indiqués dans les proportions ci-dessous, sur la base des oxydes et en pourcentage en masse de matière sèche :
| | |
|---|---|
| P₂O₅ | 21,9 à 32,4, |
| Al₂O₃ | 6,0 à 9,8, |
| Na₂O | 0,2 à 2,1, |
| MgO | 8,1 à 11,1, |
| SiO₂ | 1,0 à 3,3, |
| B₂O₃ | 0,2 à 1,7. |
